# EUROPÄISCHE PATENTSCHRIFT

(11) **EP 2 025 448 B1**
(45) Veröffentlichungstag und Bekanntmachung des Hinweises auf die Patenterteilung: **23.05.2012**
(21) Anmeldenummer: 08013376.2
(22) Anmeldetag: 24.07.2008
(51) Int. Cl.: B23Q 1/58, B23Q 5/38, F16C 29/00, F16H 19/06, F16C 29/04, F16C 29/06

(54) **Linearführungseinheit für eine Werkzeugmaschine oder dergleichen**
Linear guide unit for a machine tool or similar
Unité de guidage linéaire pour une machine-outil ou analogue

(30) Priorität: 08.08.2007 DE 102007037499
(43) Veröffentlichungstag der Anmeldung: 18.02.2009
(73) Patentinhaber: STEP-FOUR GmbH, 5071 Wals-Siezenheim (AT)
(72) Erfinder: König Dieter, 5400 Hallein (AT)
(74) Vertreter: Zinnecker, Armin

(56) Entgegenhaltungen:
- EP-A- 0 340 751
- DE-A1- 3 040 711
- DE-A1- 3 336 496
- DE-A1- 3 930 676
- DE-A1- 4 436 045
- DE-A1- 10 316 904
- DE-A1- 10 318 776
- DE-A1- 19 921 872
- DE-A1-102007 006 248

## Beschreibung

Die Erfindung betrifft ein Führungsprofil für eine Linearführungseinheit für eine Werkzeugmaschine oder dergleichen, einen Laufwagen für ein derartiges Führungsprofil und eine Linearführungseinheit für eine Werkzeugmaschine oder dergleichen.

Bei Werkzeugmaschinen, insbesondere bei Fräsanlagen und bei Heizdraht-Schneideanlagen, aber auch bei anderen Maschinen werden Linearführungseinheiten verwendet, die aus einem Führungsprofil und einem darauf längsverschieblich geführten Laufwagen bestehen. Für den Antrieb des Laufwagens auf dem Führungsprofil stehen verschiedene Möglichkeiten zur Verfügung. Der Laufwagen kann insbesondere durch einen Spindeltrieb, durch einen Zahnstangenantrieb oder durch einen Zahnriemenantrieb angetrieben werden. Auch für die Führung des Laufwagens auf dem Führungsprofil gibt es verschiedene Möglichkeiten. Der Laufwagen kann mit Rollen versehen sein. Es ist allerdings auch möglich, eine Linearführung vorzusehen, auf der der Laufwagen gleitend oder durch ein Kugelumlauflager oder sonstiges Wälzlager geführt ist.

Bei vorbekannten Linearführungseinheiten werden das Antriebsystem und das Führungssystem nach den jeweiligen Anforderungen gewählt. Auf dieser Grundlage werden das Führungsprofil und der Laufwagen gestaltet und konstruiert. Daraus ergibt sich, daß für jeden Maschinentyp je nach Anforderung eine Kombination unterschiedlicher Spezialbauteile und Standardprofile erforderlich ist. Die Profilsysteme, die am Markt für den Sondermaschinenbau erhältlich sind, und die üblichen Universalprofile müssen vielen Anforderungen genügen. Sie sind daher nicht für spezielle Anwendungsbereiche optimiert. Dies bedingt, daß jede Maschine anders konstruiert werden muß.

Als Antriebsystem ist die Schrittmotortechnik mit relativ "alter" Technologie (SF-C2 Steuerung) bekannt, die maximal einen Halbschrittbetrieb erlaubt bei relativ kleinen Antriebsleistungen. Damit ist diese Steuerung nur für kleinere Maschinen mit begrenzten Ansprüchen an Dynamik und Genauigkeit geeignet.

Ferner ist die Schrittmotortechnik mit modernem Controller und integrierten Endstufen (Xpert CNC) bekannt. Dabei handelt es sich um ein Zukaufprodukt, das zwar eine gute Performance bietet, jedoch relativ teuer ist. Eine Positionsüberwachung ist nicht möglich. Darüber hinaus sind spezielle Adaptierungen für Sondermaschinen nicht oder nur mit hohem extern zugekauften Aufwand möglich.

Ferner können zugekaufte Servoantriebe eingesetzt werden. Diese Technik ist für hochdynamische Antriebe gut geeignet, eine hohe Positioniergenauigkeit ist jedoch nur mit hohem technischen und finanziellen Aufwand realisierbar.

Schließlich sind dezentrale intelligente Achsantriebe mit Positionsrückmeldung bekannt, mit denen jedoch nur einzelne Achsen angetrieben werden können. Eine Echtzeitsynchronisierung mehrerer Achsen, wie sie für eine räumliche Bahnbearbeitung erforderlich ist, ist nicht möglich.

Aus der EP-A-0 340 751 ist eine Linearführungseinheit bekannt, bei der am Boden eines U-förmigen Führungsgehäuses eine Führungsschiene angeordnet ist und auf dieser Führungsschiene ein Läufer mittels endloser Kugelumläufe geführt ist. Das Führungsgehäuse weist eine Aufnahme für eine Drehspindel und eine Aufnahme für einen Zahnriemen auf.

Die DE 39 30 676 A1 offenbart ein Leichtmetall-Balken-Profil zur Verwendung als Linearmodul für Montage- und/oder Bewegungs-Systeme, bei dem in ecknahen Bereichen des im wesentlichen rechteckförmigen Querschnitts in Längsrichtung verlaufende kreiszylindrische Hohlräume zur Aufnahme von kreiszylindrischen Stützrohren aus Stahl oder anderen hochfesten Werkstoffen vorhanden sind. Ein derartiger Hohlraum kann zur Aufnahme, Stützung und Führung eines Schlittens dienen.

Hiervon ausgehend liegt der Erfindung die Aufgabe zugrunde, ein vielseitig verwendbares Führungsprofil für eine Linearführungseinheit vorzuschlagen sowie einen Laufwagen für ein derartiges Führungsprofil und eine entsprechende Linearführungseinheit.

Bei einem Führungsprofil für eine Linearführungseinheit für eine Werkzeugmaschine oder dergleichen wird diese Aufgabe durch die Merkmale des Anspruchs 1 gelöst.

Das Führungsprofil weist eine Aufnahme für eine Drehspindel auf. Hierbei kann es sich um eine allseits geschlossene Aufnahme handeln.

Ferner weist das Führungsprofil eine Aufnahme für eine Zahnstange auf. Die Zahnstange kann mit der Aufnahme lösbar oder unlösbar verbunden sein oder werden. Es ist allerdings auch möglich, die Zahnstange unmittelbar an dem Führungsprofil anzubringen.

Ferner weist das Führungsprofil eine Aufnahme für einen Zahnriemen auf.

An dem Führungsprofil ist eine Führungsschiene anbringbar.

An dem Führungsprofil ist eine Rollenführung angebracht, die von einer an dem Führungsprofil vorgesehenen Führungsbahn und/oder von mit dem Führungsprofil verbundenen Führungswellen gebildet wird. Besonders vorteilhaft ist es, wenn die Führungswellen in die an dem Führungsprofil vorgesehene Führungsbahn eingesetzt werden können oder eingesetzt werden. Die Führungswellen können mit dem Führungsprofil lösbar oder unlösbar verbunden werden oder sein.

Vorteilhafte Weiterbildungen sind in den Unteransprüchen beschrieben.

An dem Führungsprofil können eine Drehspindel und/oder eine Zahnstange und/oder ein Zahnriemen angebracht sein.

Vorteilhaft ist es, wenn an dem Führungsprofil mindestens zwei Antriebsvorrichtungen angebracht sind, die aus der Gruppe ausgewählt sind, die aus einer Drehspindel, einer Zahnstange und einem Zahnriemen besteht. Nach einer weiteren vorteilhaften Weiterbildung ist an dem Führungsprofil eine Drehspindel, eine Zahnstange und ein Zahnriemen angebracht.

Die Führungsschiene kann lösbar oder unlösbar mit dem Führungsprofil verbunden werden oder sein. Es ist allerdings auch möglich, daß die Führungsschiene unmittelbar an dem Führungsprofil angebracht ist.

Ferner ist es vorteilhaft, wenn an dem Führungsprofil zum einen eine Rollenführung anbringbar oder angebracht ist und wenn an dem Führungsprofil zum anderen eine Führungsschiene anbringbar oder angebracht ist.

Die Erfindung betrifft ferner einen Laufwagen für ein erfindungsgemäßes Führungsprofil, der durch die Merkmale des Anspruchs 3 gekennzeichnet ist. An dem Laufwagen ist eine Aufnahme für eine Drehspindel und eine Aufnahme für ein Zahnritzel und eine Aufnahme für einen Zahnriemen anbringbar oder angebracht.

An dem Laufwagen ist ferner eine Aufnahme für Führungsrollen und eine Aufnahme für eine Führungsschiene vorgesehen. Die Aufnahme für die Führungsrolle kann von der Aufnahme für die Führungschiene verschieden sein. Es ist allerdings auch möglich, dieselbe Aufnahme sowohl für die Führungsrollen als auch für die Führungsschiene vorzusehen.

Nach einer vorteilhaften Weiterbildung sind an dem Laufwagen Führungsrollen und/oder eine Führungsschiene angebracht. Die Führungsrollen und/oder die Führungsschiene können mit dem Laufwagen lösbar oder unlösbar verbunden sein. Es ist allerdings auch möglich, daß die Führungsrollen und/oder die Führungsschiene Bestandteil des Laufwagens sind.

Die Erfindung betrifft ferner eine Linearführungseinheit für eine Werkzeugmaschine oder dergleichen, die ein erfindungsgemäßes Führungsprofil und einen erfindungsgemäßen Laufwagen umfaßt.

Die Erfindung betrifft schließlich eine Werkzeugmaschine, insbesondere eine Heizdraht-Schneideanlage oder eine Fräsanlage, die durch ein erfindungsgemäßes Führungsprofil gekennzeichnet ist.

Eine vorteilhafte Weiterbildung der erfindungsgemäßen Werkzeugmaschine ist durch einen erfindungsgemäßen Laufwagen gekennzeichnet.

Durch die Erfindung wird ein neuartiges Profilsystem geschaffen, das neben seiner Funktion als Maschinenrahmen auch die Führungs- und Antriebsysteme für eine Fräsanlage oder eine Heizdraht-Schneideanlage oder eine sonstige Maschine aufnehmen kann. Das Integral-Profilsystem ist universell für alle Maschinentypen einsetzbar, wodurch die Vielfalt der früher für die verschiedenen Maschinentypen verwendeten Profile und Sonderteile auf einige wenige Standardteile reduziert wird. Es ist möglich, längere "freitragende" Führungen zu realisieren. Ferner ist es möglich, unterschiedliche Antriebskonzepte aufzunehmen, um verschiedenen Einsatzanforderungen in den verschiedenen Anwendungsbereichen zu entsprechen. Beispielsweise ist es möglich, eine hohe Positioniergeschwindigkeit bei großen Verfahrwegen zu erreichen oder aber eine hohe Genauigkeit bei kleineren Achslängen mit niedrigeren Geschwindigkeiten. Das erfindungsgemäße System kann in der Weise realisiert werden, daß die Antriebseinheiten vollkommen abgedeckt werden, um sie vor Umwelteinflüssen wie insbesondere Spänen und Staub in der Produktionsumgebung zu schützen. Die Erfindung ermöglicht den Einsatz hochdynamischer Antriebe bei feiner Auflösung. Ferner ist es möglich, die aktuelle Maschinenposition zu überwachen, um Beschädigungen der teuren Werkstücke oder auch der Maschine zu vermeiden. Ferner ist es möglich, eine Echtzeitsynchronisierung mehrerer Achsen für die räumliche Bahnbearbeitung zu realisieren und dreidimensionale Formen mit hoher Präzision zu schneiden und zu fräsen. Ferner können mit der Erfindung dezentrale intelligente Achsantriebe realisiert werden.

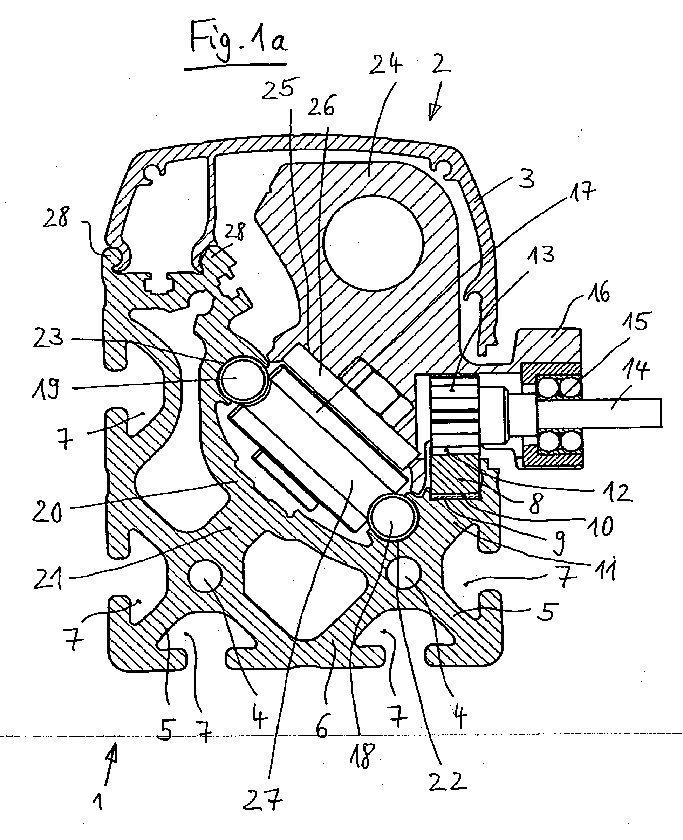

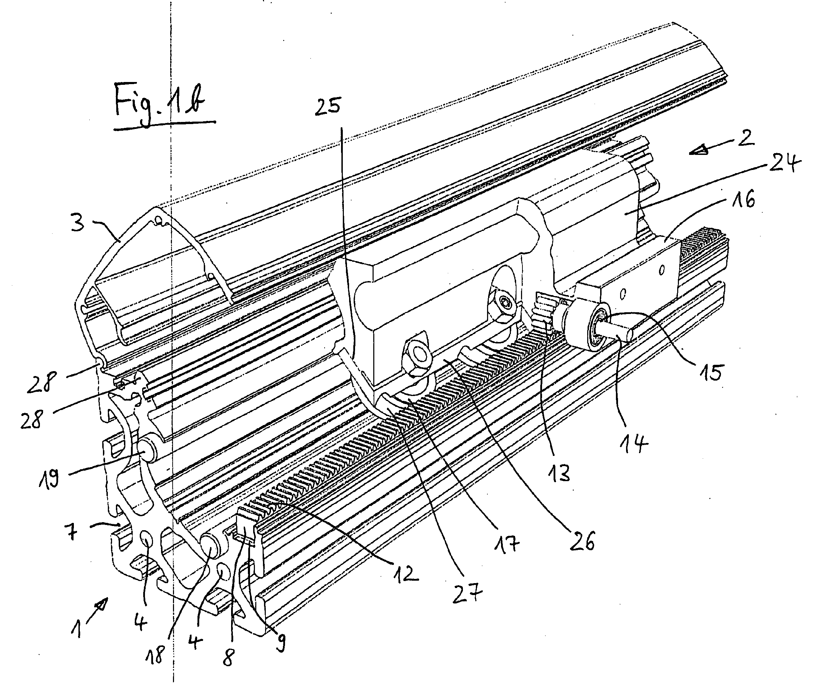

Ausführungsbeispiele der Erfindung werden nachstehend anhand der beigefügten Zeichnung im einzelnen erläutert. In der Zeichnung zeigt
- Fig. 1 a: eine Linearführungseinheit mit einem Führungsprofil mit einer Zahnstange und einer Rollenführung mit Führungswellen und mit einem Laufwagen in einem Querschnitt,
- Fig. 1 b: eine perspektivische Ansicht der Ausführungsform gemäß Fig. 1a,
- Fig. 2a: eine Linearführungseinheit mit einem Führungsprofil mit einer Drehspindel und einer Rollenführung mit Führungswellen und mit einem Laufwagen in einem Querschnitt,
- Fig. 2b: eine perspektivische Ansicht der Ausführungsform gemäß Fig. 2a,
- Fig. 3a: eine Linearführungseinheit mit einem Führungsprofil mit einer Zahnstange und einer Führungsschiene und mit einem Laufwagen in einem Querschnitt,
- Fig. 3b: eine perspektivische Ansicht der Ausführungsform gemäß Fig. 3a,
- Fig. 4a: eine Linearführungseinheit mit einem Führungsprofil mit einer Drehspindel und einer Führungsschiene und mit einem Laufwagen in einem Querschnitt,
- Fig. 4b: eine perspektivische Ansicht der Ausführungsform gemäß Fig. 4a,
- Fig. 5a: eine Linearführungseinheit mit einem Führungsprofil mit einem Zahnriemen und einer eine Rollenführung bildenden Führungsbahn und mit einem Laufwagen in einem Querschnitt,
- Fig. 5b: eine perspektivische Ansicht der Ausführungsform gemäß Fig. 5a und
- Fig. 6: eine Linearführungseinheit mit einem Führungsprofil mit einem Zahnriemen und einer Rollenführung mit Führungswellen und mit einem Laufwagen in einem Querschnitt.

In Fig. 1 a und 1 b ist eine erste Ausführungsform einer Linearführungseinheit gezeigt, die ein Führungsprofil 1, einen Laufwagen 2 und ein Abdeckungsprofil 3 umfaßt.

Das Führungsprofil 1 hat im Querschnitt einen im wesentlichen rechteckigen Umriß. Bei dem Führungsprofil 1 kann es sich um ein Aluminium-Stranggußprofil oder sonstiges Stranggußprofil handeln. Die Schmalseiten des rechteckigen Umrisses verlaufen horizontal und befinden sich oben und unten, die längeren Seiten verlaufen vertikal und befinden sich links und rechts. Im unteren Bereich des Führungsprofils 1 sind zwei Augen 4 vorgesehen, die auf gleicher Höhe liegen und die symmetrisch zur vertikalen Mittenachse des Führungsprofils 1 angeordnet sind, und zwar etwa in der Mitte jeder der beiden Profilhälften. Der vertikale Abstand der Augen 4 von der unteren Schmalseite ist genauso groß wie der horizontale Abstand von der linken und rechten längeren Seite des Umrisses des Führungsprofils 1. Von den Augen 4 führt jeweils eine pfeilförmige Verlängerung 5 in die unteren Ecken des Umrisses des Führungsprofils. Ferner führt von den Augen 4 eine jeweils schräge, aufeinanderzu gerichtete Verlängerung 6 zur Mitte der unteren Schmalseite des Umrisses des Führungsprofils 1. An der linken Schmalseite des Führungsprofils 1 sind weitere entsprechende Verlängerungen vorgesehen. Die Verlängerungen auf der rechten Schmalseite des Umrisses des Führungsprofils 1 überdecken lediglich die untere Hälfte der rechten Schmalseite. Durch die Verlängerungen 5, 6 und die weiteren Verlängerungen werden schwalbenschwanzförmige Aufnahmen 7 gebildet, und zwar jeweils zwei an der unteren Schmalseite und an der linken Seite und eine an der rechten Seite des Umrisses des Führungsprofils 1. Das Führungsprofil 1 kann durch die Aufnahmen 7 mit entsprechenden Befestigungsschienen an einer Werkzeugmaschine oder dergleichen befestigt werden.

An dem Führungsprofil 1 ist eine Zahnstange 8 angebracht. Die Zahnstange 8 liegt in einer als Vertiefung ausgebildeten Aufnahme 9, die in dem Führungsprofil 1 vorgesehen ist. Sie ist dort durch ein doppelseitiges Schaumstoffklebeband 10 befestigt, das in den Grund der Vertiefung eingelegt wird und auf das anschließend die Zahnstange 8 gelegt wird. Die als Vertiefung ausgebildete Aufnahme 9 befindet sich in einer Verlängerung 11, die von dem rechten Auge 4 schräg nach oben und außen verläuft. Sie liegt etwas unterhalb der Mitte an der rechten längeren Seite des Umrisses des Führungsprofils 1. Die Aufnahme 9 und die Zahnstange 8 verlaufen in horizontaler Längsrichtung des Führungsprofils 1.

In die oben liegende Zahnreihe 12 der Zahnstange 8 greift ein Zahnritzel 13 ein, das sich am Ende einer Welle 14 befindet, die von dem Zahnritzel 13 nach außen weist und die in einer Aufnahme 15 gelagert ist, die von einem Kugellager gebildet wird. Das Kugellager befindet sich in einem nach außen weisenden Fortsatz 16 des Laufwagens 2. Durch einen Antrieb (in der Zeichnung nicht dargestellt) der Welle 14 kann der Laufwagen 2 längs der Zahnstange 8 bewegt werden.

An dem Führungsprofil 1 ist ferner eine Rollenführung für die Führungsrollen 17 des Laufwagens 2 vorgesehen. Die Rollenführung wird von Führungswellen 18, 19 gebildet. Die untere Führungswelle 18 liegt über dem rechten Auge 4. Die obere Führungswelle 19 befindet sich innerhalb und über der unteren Führungswelle 18. Die Verbindungslinie von der Führungswelle 18 zur Führungswelle 19 verläuft in einem Winkel von etwa 45° nach oben und innen. Unterhalb der Führungswellen 18, 19 weist das Führungsprofil 1 ein Verbindungsteil 20 auf, das bogenförmig ausgestaltet ist und dessen Mitte durch ein weiteres Verbindungsteil 21 mit dem linken Auge 4 verbunden ist.

Die Führungswellen 18, 19 sind in Aufnahmen 22, 23 eingepaßt, die in etwa halbkreisförmig sind, sich allerdings über einen Winkelbereich von etwas mehr als 180° erstrecken, und die einander gegenüberliegen.

Der Laufwagen 2 umfaßt einen Laufwagenkörper 24, den Fortsatz 16 und eine Aufnahme 25 für die Führungsrollen 17. Die Aufnahme 25 ist an dem Laufwagenkörper 24 vorgesehen. Mit der Aufnahme 25 ist ein Rollengehäuse 26 lösbar verbunden. In dem Rollengehäuse 26 sind die Führungsrollen 17 drehbar gelagert. Die Führungsrollen 17 sind als Profillaufrollen ausgebildet. Sie weisen umlaufende Vertiefungen 27 auf, mit denen sie mit den Führungswellen 18, 19 in Kontakt treten und durch die sie auf diesen Führungswellen 18, 19 geführt sind. Die Führungswellen 18, 19 sind aus Stahl, insbesondere aus gehärtetem Stahl, hergestellt. Die als Profillaufrollen ausgebildeten Führungsrollen 17 sind aus gehärtetem Stahl gefertigt. Der Laufwagenkörper 24 ist als Profilkörper ausgestaltet.

Der Laufwagen 2 ist von dem Abdeckungsprofil 3 umgeben. Das Abdeckungsprofil 3 kann aus Kunststoff hergestellt sein. Es ist in Verlängerungen 28 einschnappbar, die sich von der oberen Schmalseite des Führungsprofils 1 nach oben erstrecken und die einander gegenüberliegen. Die Außenkontur des Abdeckungsprofils 3 verlängert den rechteckigen Umriß des Führungsprofils 1 nach oben in einer im wesentlichen ebenfalls rechteckigen Form. Das rechte untere Ende des Abdeckungsprofils 3 endet im Bereich des Fortsatzes 16 des Laufwagens 2, wobei dieser Fortsatz 16 aus dem rechteckigen Umriß des Führungsprofils 1 und des Abdeckprofils 3 nach außen herausragt.

Die in Fig. 1 a und 1 b gezeigte Linearführungseinheit verläuft in horizontaler Richtung. Sie kann allerdings auch in vertikaler Richtung eingebaut und verwendet werden.

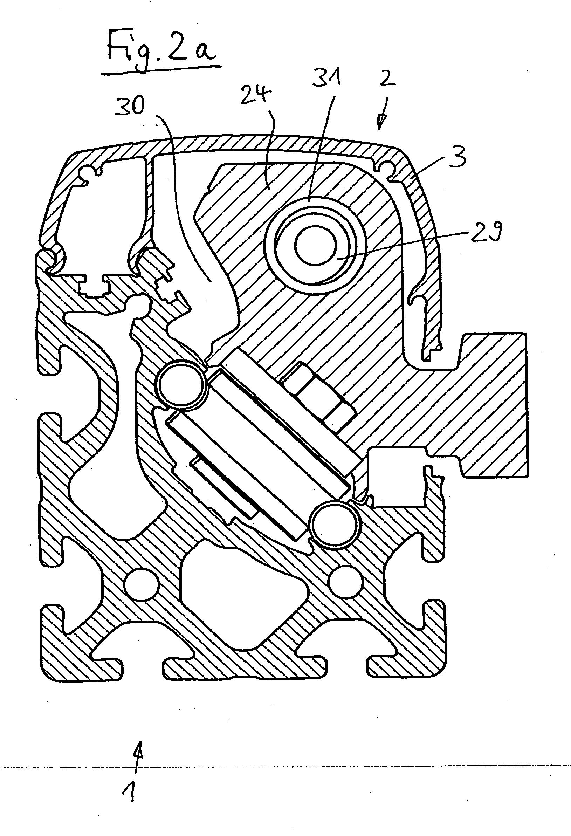

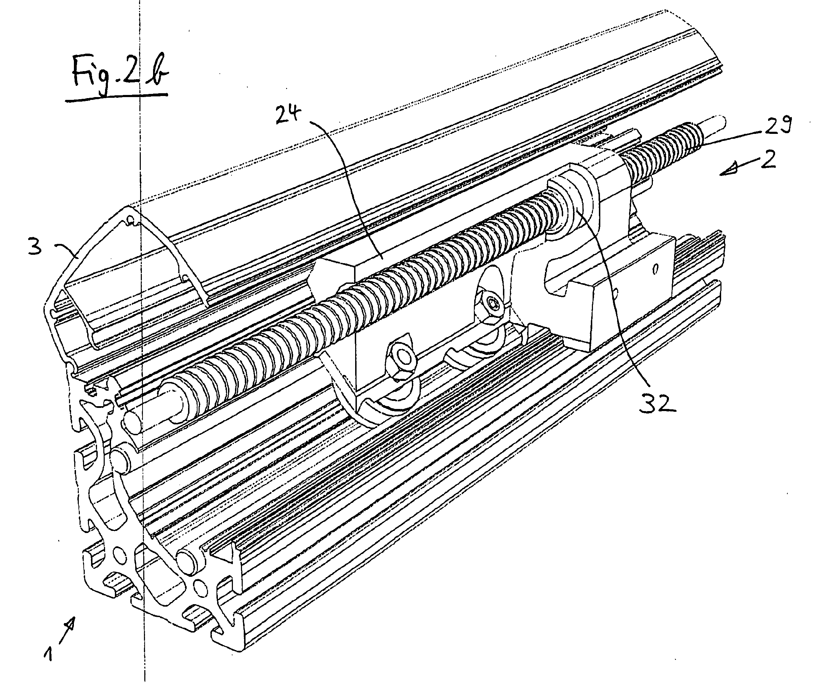

Bei der in Fig. 2a und 2b gezeigten Ausführungsform sind gleiche Teile mit den gleichen Bezugszeichen versehen, so daß sie nicht erneut beschrieben werden müssen. Hier ist keine Zahnstange und kein Zahnritzel vorhanden. Der Antrieb erfolgt bei dieser Ausführungsform durch eine Drehspindel 29, die als Kugelgewindespindel ausgebildet ist. Die Drehspindel 1 ist an den Enden des Führungsprofils 29 drehbar und antreibbar gelagert. In dem Führungsprofil 1 ist eine Aufnahme 30 für die Drehspindel 29 vorgesehen. Die Aufnahme 30 wird durch den Aufnahmeraum gebildet, der sich im rechten oberen Bereich des Umrisses des Führungsprofils 1 befindet und an den sich nach oben ein Aufnahmeraum des Abdeckprofils 3 anschließt.

In dem Laufwagenkörper 24 ist ein Hohlraum 31 vorgesehen, der in Längsrichtung des Führungsprofils 1 und des Laufwagens 2 verläuft, der im wesentlichen zylinderförmig ist und dessen Durchmesser größer ist als der Durchmesser der Drehspindel 29. Im Bereich dieses Hohlraums 31 ist eine Aufnahme 32 für die Drehspindel 29 vorgesehen. Die Aufnahme 32 ist als Spindelmutter ausgebildet, die fest mit dem Laufwagenkörper 24 verbunden ist und in die die Drehspindel 29 zum Antrieb des Laufwagens 2 eingreift.

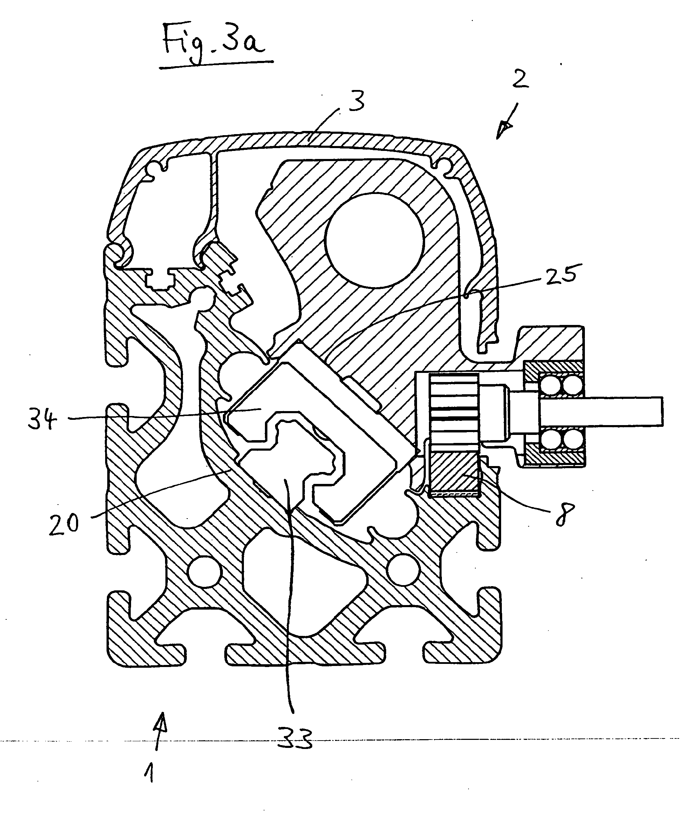

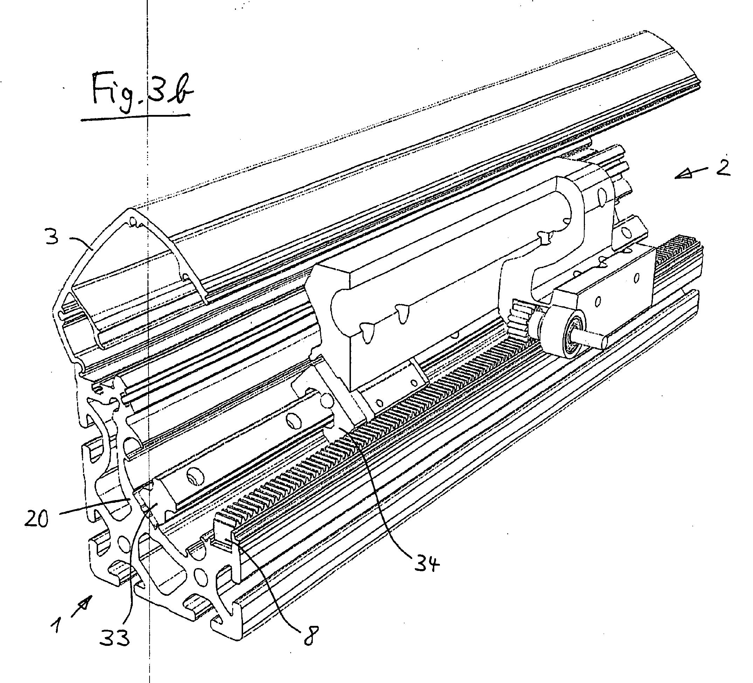

Bei der Ausführungsform nach Fig. 3a und 3b ist, wie in der Ausführungsform nach Fig. 1 a und 1b, in dem Führungsprofil 1 eine Zahnstange 8 vorhanden. Im Unterschied zu den Ausführungsformen nach Fig. 1 a und 1b und nach Fig. 2a und 2b erfolgt die Führung des Laufwagens 2 in dem Führungsprofil 1 bei der Ausführungsform nach Fig. 3a und 3b jedoch nicht durch eine Rollenführung, sondern durch eine Führungsschiene 33, die mit dem Führungsprofil 1 verbunden ist. Die Führungsschiene 33 ist in der Mitte des Verbindungsteils 20 an dem Führungsprofil 1 angebracht. Sie ragt in einem Winkel von 45° schräg nach rechts oben. Die Führungsschiene 33 weist ein im wesentlichen T-förmiges Profil auf. An dem Laufwagen 2 ist eine zugehörige Führungsschiene 34 für die Führungsschiene 33 des Führungsprofils 1 vorgesehen. Die Laufwagen-Führungsschiene 34 ist in die Aufnahme 25, die auch zur Aufnahme des Rollengehäuses 26 dient, eingesetzt und dort befestigt.

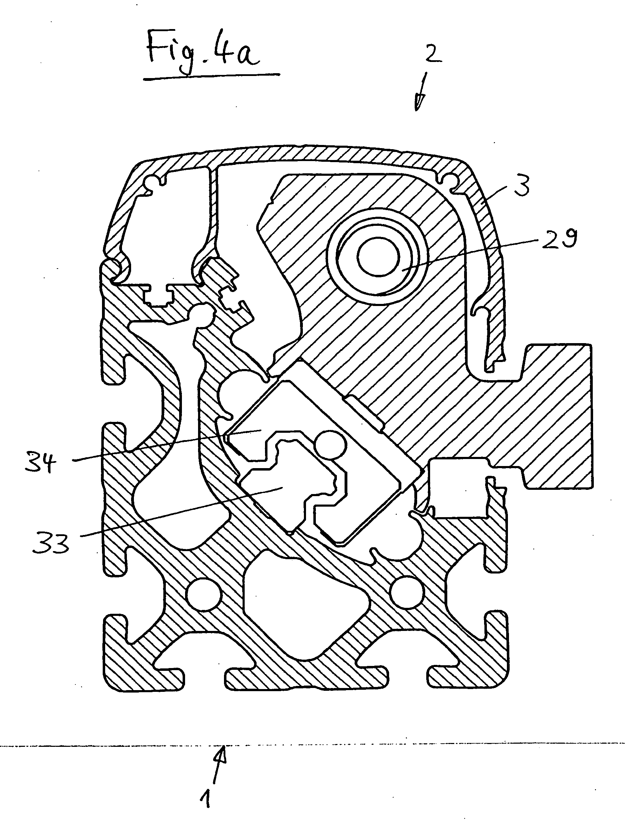

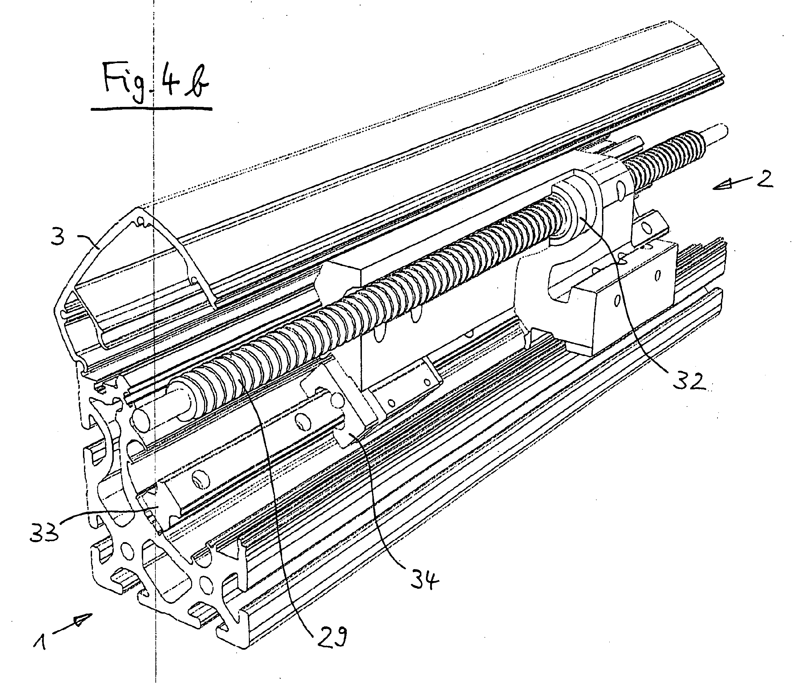

Bei der Ausführungsform nach Fig. 4a und 4b ist der Laufwagen 2 wie bei der Ausführungsform nach Fig. 3a und 3b durch eine Führungsprofil-Führungsschiene 33 und eine Rollenwagen-Führungsschiene 34 geführt. Hier erfolgt allerdings der Antrieb wie bei der Ausführungsform nach Fig. 2a und 2b durch eine Drehspindel 29, die in eine als Spindelmutter ausgebildete Aufnahme 32 des Führungswagens 2 eingreift.

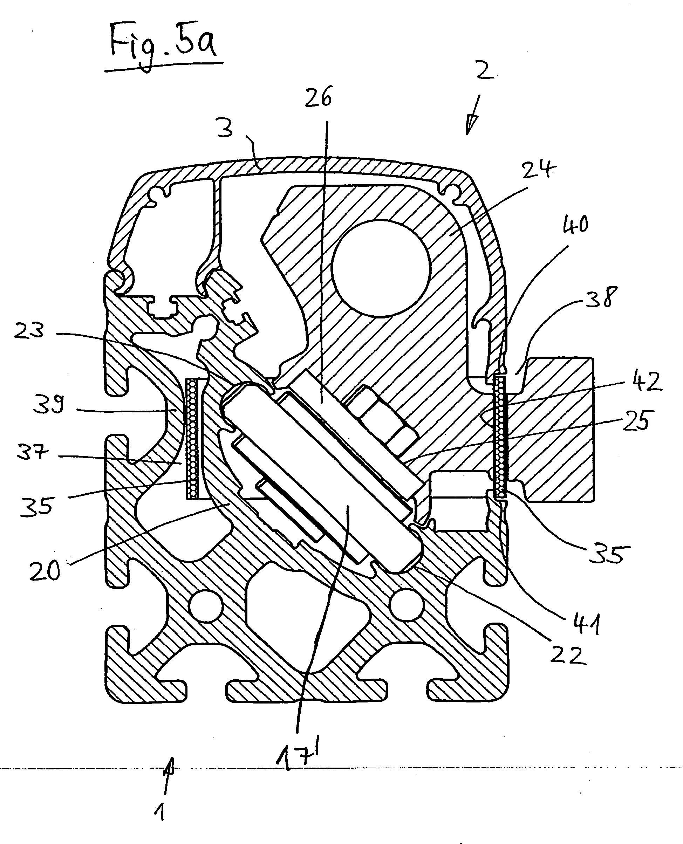

Bei der Ausführungsform nach Fig. 5a ist an dem Führungsprofil 1 ein Zahnriemen 35 angebracht. Der Zahnriemen 35 ist an den Enden des Führungsprofils 1 an Zahnrollen 36 drehbar und antreibbar gelagert, die um vertikale Achsen drehbar sind. Das Führungsprofil 1 weist eine Aufnahme 37, 38 für den Zahnriemen 35 auf. Die linke Aufnahme 37 wird von dem Zwischenraum gebildet, der sich zwischen dem oberen Endbereich des Verbindungsteils 20 und einem bogenförmigen Bereich 39 des Führungsprofils 1 befindet. Der obere Endbereich des Verbindungsteils 20 verläuft im wesentlichen vertikal. Der bogenförmige Bereich 39 ist zur Innenseite des Führungsprofils 1 hin konvex gekrümmt.

Die rechte Aufnahme 38 wird von zwei Absätzen 40, 41 gebildet, die nach außen weisen. Der obere Absatz 40 befindet sich am unteren äußeren Ende des Abdekkungsprofils 3. Der untere Absatz 41 befindet sich am oberen äußeren Ende des Führungsprofils 1 auf dessen rechter längerer Seite.

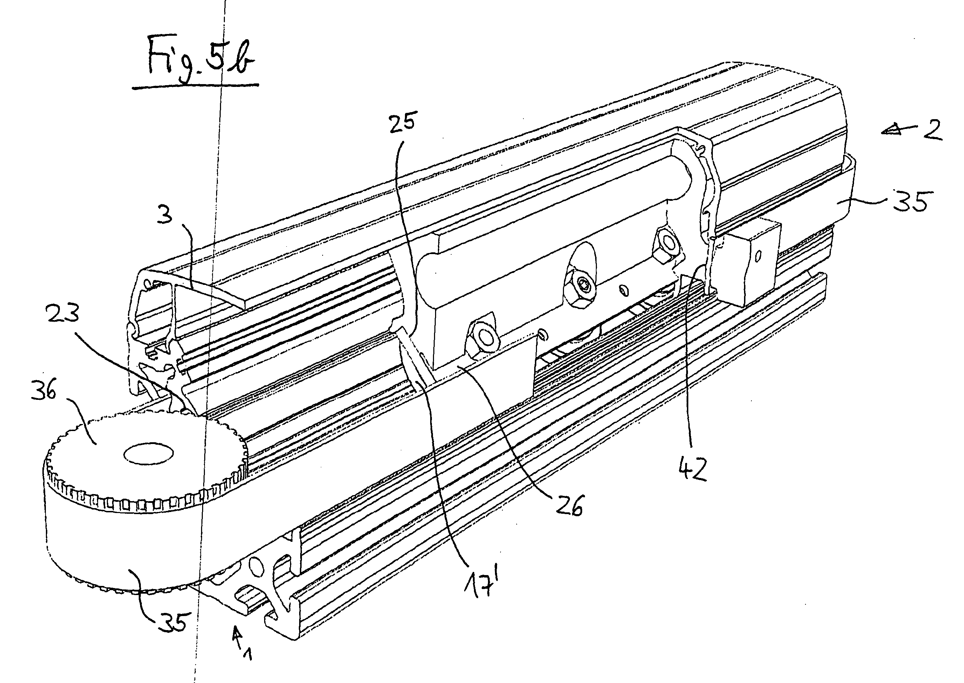

Bei der Ausführungsform nach Fig. 5a und 5b sind, ähnlich wie bei der Ausführungsform nach Fig. 1a und 1b sowie Fig. 2a und 2b, Führungsrollen 17' vorhanden, die mit einem Rollengehäuse 26 drehbar verbunden sind, das in der Aufnahme 25 des Laufwagenkörpers 24 angebracht ist. Die Führungsrollen 17' stützen sich in den Aufnahmen 22, 23 des Führungsprofils 1 ab. Im Unterschied zu den Ausführungsformen nach Fig. 1 und 2 sind bei der Ausführungsform nach Fig. 5 allerdings keine Führungswellen 18, 19 vorhanden. Die Führungsrollen 17' werden bei der Ausführungsform nach Fig. 5 vielmehr unmittelbar in den Aufnahmen 22, 23 abgestützt und geführt. Die Aufnahmen 22, 23 bilden auf diese Weise eine Führungsbahn für die Führungsrollen 17'. Die äußeren Umfangsflächen der Führungsrollen 17' sind hieran angepaßt und nicht wie bei den Ausführungsformen nach Fig. 1 und 2 konkav, sondern im wesentlichen konvex ausgestaltet. Sie weisen im Querschnitt die aus Fig. 5a ersichtlichen abgerundeten Ecken auf. Die Führungsrollen 17' können aus Kunststoff hergestellt sein.

An dem Laufwagen 2 ist eine Aufnahme 42 für den Zahnriemen 35 angebracht, die aus einer Zahnreihe besteht, die nach außen weist und in die die nach innen gerichteten Zähne des Zahnriemens 35 zum Antrieb des Führungswagens 2 eingreifen.

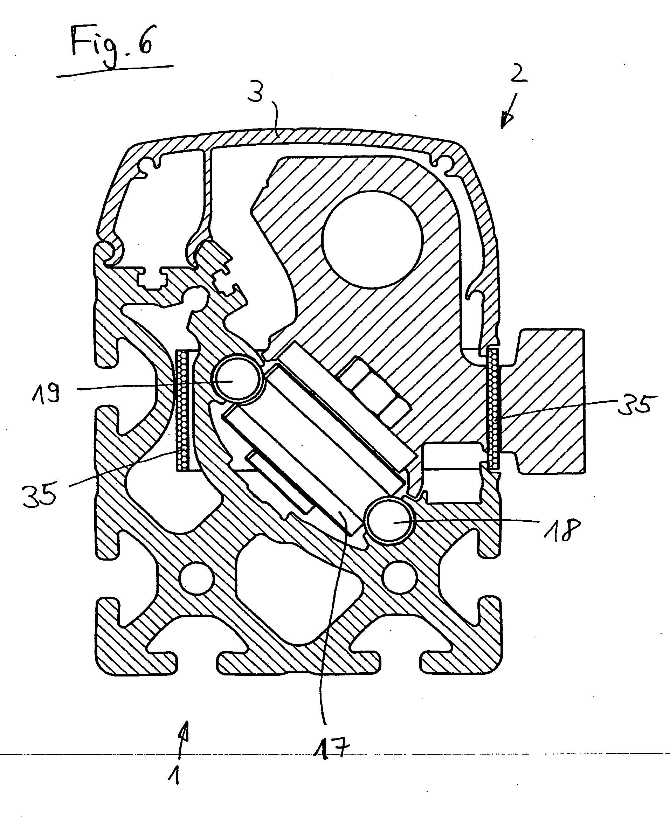

Bei der Ausführungsform nach Fig. 6 wird der Laufwagen 2, wie bei der Ausführungsform nach Fig. 5, von einem Zahnriemen 35 angetrieben. Die Führung des Laufwagens 2 erfolgt durch Führungswellen 18, 19, auf denen die Führungsrollen 17 geführt sind.

Die Erfindung kann insbesondere bei Fräsanlagen und bei Heizdraht-Schneideanlagen angewendet werden. Eine Heizdraht-Schneideanlage umfaßt eine linke und rechte horizontale Linearführungseinheit mit jeweils einem Führungsprofil und einem Laufwagen. Jeder Laufwagen trägt eine vertikale Linearführungseinheit mit einem Führungsprofil und einem Laufwagen. Zwischen den Laufwagen der vertikalen Linearführungseinheiten ist ein Heizdraht gespannt, dessen Länge je nach der Position der vier Laufwagen veränderbar ist und der durch elektrischen Strom beheizbar ist. Durch eine Ansteuerung der vier Laufwagen kann innerhalb des Arbeitsbereiches jede Lage und Orientierung des Heizdrahtes erzeugt werden. Durch eine entsprechende Steuerung kann der Heizdraht vorgegebene räumliche Körper aus einem Vollmaterial, beispielsweise aus Styropor oder einem anderen Material, herstellen.

Gemäß der Erfindung können drei verschiedene Führungssysteme und drei Antriebsvarianten realisiert werden. Die Führung des Laufwagens auf dem Führungsprofil kann durch eine Führungsschiene oder durch eine Rollenführung erfolgen, wobei die Rollenführung unmittelbar in dem Führungsprofil stattfinden kann oder auf mit dem Führungsprofil verbundenen Führungswellen. Der Antrieb kann durch eine Drehspindel, eine Zahnstange oder einen Zahnriemen erfolgen. Es ergeben sich somit theoretisch neun verschiedene Führungs- und Antriebsvarianten. Für die Praxis sind allerdings die sechs dargestellten Ausführungsbeispiele am günstigsten.

Die erfindungsgemäße Linearführungseinheit kann als geschlossenes Profil ausgeführt werden. Das Führungsprofil, der als Profil ausgebildete Laufwagen und das Abdeckprofil können in einem einfachen Clip-System montiert werden. Mit der Erfindung können dezentrale intelligente Achsantriebe realisiert werden, die die Leistungsansteuerung der Antriebsmotoren erlauben und gleichzeitig die Möglichkeit einer Positionsüberwachung bieten. Für unterschiedliche mechanische Antriebskonzepte kann jeweils eine variable Schrittauflösung realisiert werden. Es ist möglich, die Auswertung von Encodersignalen oder anderer Positionsrückmeldungen (z.B. Linearmeßsystem) direkt am Antrieb zu realisieren. Als zentrale Recheneinheit kann ein Mehrachscontroller verwendet werden (beispielsweise auf der Basis Xpert Link), der einerseits über den USB-BUS mit einem PC kommuniziert und andererseits eine störunempfindliche Übertragung (RS 485 Standard) der Puls- und Richtungssignale zu den intelligenten Achsantrieben erlaubt.

Das Führungsprofil gemäß den Ausführungsbeispielen ist für alle Maschinentypen einsetzbar, insbesondere für Heizdraht-Schneideanlagen und Fräsanlagen. Es ist ferner für alle Achsen (X-, Y- und Z-Achse) einsetzbar. Das Führungsprofil bietet eine hohe Biege- und Verwindungssteifigkeit auch bei großen freitragenden Längen. In das Führungsprofil können verschiedene Antriebssysteme integriert werden. Es kann mit großer Genauigkeit hergestellt werden. Ferner kann das Führungsprofil verschiedene Antriebskonzepte aufnehmen (Spindeltrieb, Zahnstangentrieb, Linearantrieb und möglicherweise weitere Antriebe).

Die erfindungsgemäße Linearführungseinheit kann auch für Antriebssysteme für Handlingsysteme verwendet werden, beispielsweise für Roboter oder Positionierer.

Der Spindeltrieb hat den Vorteil, daß er spielfrei realisiert werden kann und daß er kostengünstig ist. Er kann für Längen bis 1,5 m verwendet werden. Der Zahnstangenantrieb eignet sich auch für größere Längen, ist aber teurer. Mit einem Zahnriemenantrieb können Längen bis etwa 2,5 m realisiert werden.

Eine Führung durch einen Laufwagen mit Rollen ist verhältnismäßig kostengünstig. Für große Kräfte (Lagerkräfte) ist eine Linearführung besser geeignet. Die Linearführung kann gleitend oder mit einem Kugelumlauflager realisert werden.

## Patentansprüche

1. Führungsprofil für eine Linearführungseinheit für eine Werkzeugmaschine oder dergleichen, welches eine Aufnahme (30) für eine Drehspindel (29) und eine Aufnahme (9) für eine Zahnstange (8) und eine Aufnahme (37, 38) für einen Zahnriemen (35) aufweist und an dem eine Führungsschiene (33) anbringbar ist,
**dadurch gekennzeichnet,**
**daß** an dem Führungsprofil eine Rollenführung (22, 23; 18, 19) angebracht ist, die von einer an dem Führungsprofil (1) vorgesehenen Führungsbahn (22, 23) und/oder von mit dem Führungsprofil (1) verbundenen Führungswellen (18, 19) gebildet wird.

2. Führungsprofil nach Anspruch 1, **dadurch gekennzeichnet, daß** an dem Führungsprofil (1) eine Drehspindel (29) und/oder eine Zahnstange (8) und/oder ein Zahnriemen (35) und/oder eine Führungsschiene (33) angebracht sind.

3. Laufwagen für ein Führungsprofil (1) nach einem der vorhergehenden Ansprüche, **dadurch gekennzeichnet, daß** an dem Laufwagen (2) eine Aufnahme (32) für eine Drehspindel (29) und eine Aufnahme (15) für ein Zahnritzel (13) und eine Aufnahme (42) für einen Zahnriemen (35) anbringbar oder angebracht sind und daß an dem Laufwagen (2) eine Aufnahme (25) für Führungsrollen (17) und eine Aufnahme (25) für eine Führungsschiene (34) vorgesehen ist.

4. Laufwagen nach Anspruch 3, **dadurch gekennzeichnet, daß** an dem Laufwagen (2) Führungsrollen (17, 17') und/oder eine Führungsschiene (34) angebracht sind.

5. Linearführungseinheit für eine Werkzeugmaschine oder dergleichen mit einem Führungsprofil (1) nach einem der Ansprüche 1 oder 2 und einem Laufwagen (2) nach einem der Ansprüche 3 oder 4.

6. Werkzeugmaschine, insbesondere Heizdraht-Schneideanlage oder Fräsanlage, **gekennzeichnet durch** ein Führungsprofil (1) nach Anspruch 1 oder 2.

7. Werkzeugmaschine nach Anspruch 6, **gekennzeichnet durch** einen Laufwagen (2) nach einem der Ansprüche 3 oder 4.

## Claims

1. A guide section for a linear guide unit for a machine tool or the like which has a receiver (30) for a rotary spindle (29) and a receiver (9) for a toothed rack (8) and has a mount (37, 38) for a toothed belt (34) and can be attached to a guide rail (33),
**characterised in that**
a roller guide (22, 23; 18, 19) which is formed by a guideway (22, 23) provided at the guide section (1) and/or by guide shafts (18, 19) connected to the guide section (1) is attached to the guide section.

2. A guide section in accordance with claim 1, **characterised in that** a rotary spindle (29) and/or a toothed rack (8) and/or a toothed belt (35) and/or a guide rail (33) is/are attached to the guide section (21).

3. A carriage for a guide section (1) in accordance with one of the preceding claims, **characterised in that** a receiver (32) for a rotary spindle (29) and a receiver (15) for a sprocket (13) and a receiver (42) for a toothed belt (35) are attachable or attached to the carriage (2); and **in that** a receiver (25) for guide rollers (17) and a receiver (25) for a guide rail (34) are provided at the carriage (2).

4. A carriage in accordance with claim 3, **characterised in that** guide rollers (17, 17') and/or a guide rail (34) are attached to the carriage (2).

5. A linear guide unit for a machine tool or the like having a guide section (1) in accordance with one of the claims 1 or 2 and having a carriage (2) in accordance with one of the claims 3 or 4.

6. A machine tool, in particular a hot wire cutter or miller, **characterised by** a guide section (1) in accordance with either of claims 1 or 2.

7. A machine tool in accordance with claim 6, **characterised by** a carrier (2) in accordance with either of the claims 3 or 4.

## Revendications

1. Profilé de guidage destiné à une unité de guidage linéaire pour une machine-outil ou similaire, qui présente un logement (30) pour une broche de tournage (29), un logement (9) pour une crémaillère (8) et un logement (37, 38) pour une courroie crantée (35), et sur lequel une glissière de guidage (33) est installable,
**caractérisé en ce que**,
sur le profilé de guidage, un guidage à rouleaux (22, 23; 18, 19) est installé, qui est constitué par une coulisse (22, 23) prévue sur le profilé de guidage (1) et/ou par des arbres de guidage (18, 19) reliés avec le profilé de guidage (1).

2. Profilé de guidage selon la revendication 1, **caractérisé en ce que**, sur le profilé de guidage (1), une broche de tournage (29) et/ou une crémaillère (8) et/ou une courroie crantée (35) et/ou une glissière de guidage (33) sont installées.

3. Chariot mobile pour un profilé de guidage (1) selon une quelconque des revendications précédentes, **caractérisé en ce que** sur le chariot mobile (2), un logement (32) pour une broche de tournage (29), un logement (15) pour un pignon (13) et un logement (42) pour une courroie crantée (35) sont installables ou installés et **en ce que**, sur le chariot mobile (2), un logement (25) pour des galets de guidage (17) et un logement (25) pour une glissière de guidage (34) sont prévus.

4. Chariot mobile selon la revendication 3, **caractérisé en ce que** sur le chariot mobile (2), des galets de guidage (17, 17') et/ou une glissière de guidage (34) sont installés.

5. Unité de guidage linéaire pour une machine-outil ou similaire avec un profilé de guidage (1) selon une quelconque des revendications 1 ou 2 et un chariot mobile (2) selon une quelconque des revendications 3 ou 4.

6. Machine-outil, notamment installation de coupage de fil de chauffage ou installation de fraisage, **caractérisée par** un profilé de guidage (1) selon la revendication 1 ou 2.

7. Machine-outil selon la revendication 6, **caractérisée par** un chariot mobile (2) selon une quelconque des revendications 3 ou 4.
